# DEMANDE DE BREVET EUROPEEN

(11) **EP 1 881 509 A2**
(43) Date de publication de la demande: **23.01.2008**
(21) Numéro de dépôt: 07354028.8
(22) Date de dépôt: 10.05.2007
(51) Int. Cl.: H01B 7/22, H01B 11/00, B61B 12/06, G02B 6/44

(54) **Câble multiconducteurs à double porteur pour une ligne de sécurité d'équipements sur les pylônes et de communication en gare d'une installation de transport téléporteé**

(30) Priorité: 19.07.2006 FR 0606566
(71) Demandeur: POMAGALSKI S.A., 38600 Fontaine (FR)
(72) Inventeur: Minne, Guillaume, 38100 Grenoble (FR)
(74) Mandataire: Hecké, Gérard

(57) **Abrégé**

Un câble électrique autoporté est composé d'un câble multipaire CM de conducteurs isolés pour le transport d'énergie et de signaux électriques de surveillance liés au fonctionnement d'une installation téléportée, d'une paire de câbles porteurs 3,4 en fils d'acier s'étendant parallèlement au câble multipaire CM pour le soutenir, et d'une gaine 5 extérieure en matière plastique extrudée destinée à lier les deux câbles porteurs 3,4 périphériques au câble multipaire CM. La gaine 5 plastique enveloppe un troisième câble périphérique renfermant un faisceau de fibres optiques FO pour une liaison de transmission de données, ledit troisième câble étant situé à l'extérieur du câble multipaire CM et décalé angulairement des deux câbles porteurs 3,4. On peut ainsi réalisé une configuration de câble multipaire double porteur en quadruple huit, ou double porteur et tri huit, selon la présence ou l'absence d'un quatrième câble 21 périphérique pour la liaison d'équipotentiel.
Application : ligne de sécurité s'étendant le long d'une installation de transport téléportée.

## Description

### Domaine technique de l'invention

L'invention est relative à un câble électrique autoporté d'une ligne de sécurité s'étendant le long d'une installation de transport téléportée, ledit câble étant composé :
- d'un câble multipaire de conducteurs isolés pour le transport d'énergie et de signaux électriques de surveillance liés au fonctionnement de l'installation,
- d'une paire de câbles porteurs en fils d'acier s'étendant parallèlement au câble multipaire pour le soutenir,
- et d'une gaine extérieure en matière plastique extrudée destinée à lier les deux câbles porteurs périphériques au câble multipaire.

### Etat de la technique

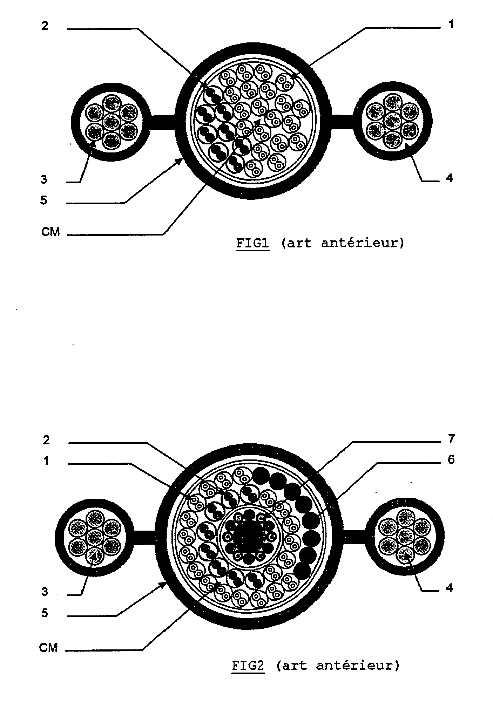

Dans les installations de transport par câble aérien porteur-tracteur, notamment les téléphériques, télécabines, télésièges et autres, le coffret principal de commande du fonctionnement de l'installation est relié par un circuit électrique de contrôle et de sécurité à l'autre extrémité de l'installation en passant par les pylônes. Le circuit électrique est généralement constitué par un câble multiconducteur ou multipaire autoporté pour transmettre les informations entre les gares, pour le téléphone et toute autre transmission d'informations et de données. Il est connu à cet effet d'utiliser les câbles multiconducteurs double porteur et double huit des figures 1 et 2. Ce câble électrique multiconducteur est autoporté par des câbles porteurs latéraux capables de supporter la charge et la tension mécanique du câble porteur-tracteur.

Sur la figure 1, le câble d'une ligne de sécurité est composé :
- d'un câble central multipaire CM renfermant un faisceau de vingt paires de fils électriques isolés non blindés 1 et huit paires de fils blindés 2 ;
- d'un premier câble porteur 3 acier avec gaine discontinue ;
- d'un deuxième câble porteur 4 acier avec gaine continue ;
- d'une gaine extérieure 5 en matière plastique extrudée destinée à lier les deux câbles porteurs 3, 4 au câble multipaire central CM.

Le câble central multipaire CM sert à transmettre entre les gares les informations nécessaires au fonctionnement du téléporté, sert à transmettre au pupitre de conduite le signal issu de l'anémomètre ou girouette, ou détecteur de déraillement, et sert également à la transmission du téléphone et autres données.
Le premier câble porteur 3 à fils torsadés en acier a une double fonction consistant à porter à gauche le câble central multipaire CM et à assurer le circuit de sécurité entre les gares et les pylônes pour le raccordement de détecteurs, notamment de déraillement, de fin de piste, etc....
Le deuxième câble porteur 4 à fils torsadés en acier possède aussi une double fonction consistant à porter à droite le câble central multipaire CM, et à assurer une liaison équipotentielle des gares et des pylônes.

Sur la figure 2, de fausses branches 6 complètent le remplissage du câble central multipaire CM à vingt huit paires de fils électriques 1, 2, lequel est aussi autoporté par les deux câbles porteurs 3, 4 latéraux en acier. Des fibres optiques 7 sont en plus noyées dans la partie médiane du câble central multipaire CM pour assurer la liaison entre les automates de la gare motrice et de la gare de retour, et transmettre les informations liées à l'exploitation (vidéo, etc...).

Après la mise en tension du câble de la ligne de sécurité sur les pylônes, les deux câbles porteurs 3, 4 à fils torsadés en acier doivent être dénudés sur une longueur de deux mètres environ. Ils sont ensuite coupés au milieu de chaque pylône pour autoriser leurs amarrages à la potence au moyen d'organes de serrage. Des détecteurs de déraillement sont disposés au niveau de chaque pylône à proximité des balanciers à galets de compression ou de support du câble porteur-tracteur, et sont insérés électriquement dans la ligne de sécurité qui s'étend le long de l'installation. En cas d'incident de déraillement ou de chute du câble porteur-tracteur de l'un quelconque des galets, le détecteur associé provoque l'interruption de la ligne de sécurité suite à l'ouverture d'un contact de commande connecté électriquement en série, suivi du déclenchement du groupe de sécurité, et de l'arrêt de l'installation. Tout autre défaut de ligne (fuite à la terre, court-circuit, coupure des fils de ligne,...) provoque une variation ou une coupure du courant de ligne avec signalisation au groupe de sécurité. La remise en route nécessite la suppression du défaut et de sa cause, ainsi qu'une commande de réarmement manuelle ou automatique.

Le deuxième câble porteur 4 à fils torsadés en acier selon la figure 1 ou 2 est réservé pour assurer la liaison équipotentielle des gares et des pylônes. Il ne peut pas être utilisé pour une utilisation en surveillance double ligne, sans ajouter de câble multipaire supplémentaire. D'autre part, le transport d'énergie électrique pour l'alimentation de dispositifs électriques et/ou électroniques sur les pylônes ou en gare opposée, est également impossible par l'intermédiaire du deuxième câble porteur 4.

Un autre inconvénient est la présence des fibres optiques 7, lesquelles sont intégrées au centre du câble multipaire CM selon la figure 2. Lors du montage et de la connexion de la ligne, une découpe annulaire imprécise du câble multipaire CM au niveau des pylônes risque d'endommager ou de couper les fibres optiques 7, ce qui implique la réparation au moyen de connecteurs optiques pour rétablir la continuité et la liaison entre les automates des gares motrice et de retour. La mise en place de connecteurs optiques constitue néanmoins une opération supplémentaire qui rallonge le temps de montage.

Pour les réseaux de basse tension, il existe aussi des câbles plats, subdivisés en différents compartiments juxtaposés réservés à un premier faisceau de conducteurs de puissance, un deuxième faisceau de fils fins, et un troisième faisceau de fibres optiques. L'ensemble des compartiments est noyé dans une gaine plastique extérieure souple, de forme allongée et aplatie. Ce type de câble plat est utilisé pour la domotique dans le bâtiment et le tertiaire, et est logé généralement dans une plinthe. N'étant pas porteur, un tel câble n'est pas adapté pour constituer une ligne de sécurité autoportée d'une installation de transport aérien du genre télécabine.

### Objet de l'invention

L'objet de l'invention consiste à réaliser un câble électrique multipaire double porteur polyvalent et à fonctions multiples pour une ligne de sécurité d'équipements sur les pylônes, et de communication en gare d'une installation de transport téléportée.

Le câble selon l'invention est caractérisé en ce que la gaine plastique enveloppe un troisième câble périphérique renfermant un faisceau de fibres optiques pour la liaison entre les automates et la transmission de données, ledit troisième câble étant situé à l'extérieur du câble multipaire et décalé angulairement des deux câbles porteurs.

On peut ainsi former un câble multipaire double porteur- tri huit et une alimentation par les câbles porteurs, notamment pour le transport d'énergie électrique d'alimentation d'organes électriques et/ou électroniques présents sur les pylônes ou en gare opposée, ainsi qu'à la transmission d'un signal de commande extérieure. La découpe du câble multipaire est d'autre part facilitée sans risque d'endommager le faisceau extérieur de fibres optiques. La liaison équipotentielle est dans ce cas intégrée dans le câble multipaire.

Selon un mode de réalisation préférentiel, un quatrième câble périphérique de fils conducteurs est porté par la gaine pour assurer une liaison équipotentielle des gares et des pylônes de l'installation. Le troisième câble à fibres optiques et le quatrième câble d'équipotentiel sont disposés de part et d'autre du câble multipaire. Les quatre câbles périphériques sont ainsi répartis autour du câble multipaire central de section circulaire avec des décalages angulaires prédéterminés, de manière à former une configuration de câble multipaire double porteur en quadruple huit. En plus des avantages précités pour le câble multipaire double porteur- tri huit, la configuration câble multipaire double porteur en quadruple huit, présente les possibilitrés additionnelles suivantes :
- la surveillance d'une double ligne sans ajout d'un câble multipaire supplémentaire lorsque les deux câbles porteurs sont ajourés et isolés ;
- formation d'une liaison équipotentielle réalisée exclusivement par le câble de fils de cuivre, permettant ainsi la surveillance double ligne par les câbles porteurs.

### Description sommaire des dessins

D'autres avantages et caractéristiques ressortiront plus clairement de la description qui va suivre d'un mode particulier de réalisation de l'invention donné à titre d'exemple non limitatif et représenté aux dessins annexés, dans lesquels :
La figure 1 illustre une vue schématique en coupe transversale d'un câble de ligne connu, composé d'un câble central multiconducteur autoporté par deux câbles porteurs latéraux en acier, l'ensemble étant appelé câble multipaire double porteur-double huit ;
La figure 2 représente une variante également connue du câble multipaire double porteur-double huit de la figure 1, avec un faisceau de fibres optiques à l'intérieur du câble central multipaire ;
La figure 3 montre une vue schématique d'une installation téléportée monocâble comprenant une ligne de sécurité équipée d'un câble multipaire selon l'invention ;
La figure 4 est une vue en coupe transversale du câble multipaire double porteur- quadruple huit utilisé sur l'installation de la figure 3 ;
La figure 5 montre une variante de la figure 4, après suppression du quatrième câble périphérique pour former un câble multipaire double porteur-tri huit.

### Description détaillée de l'invention

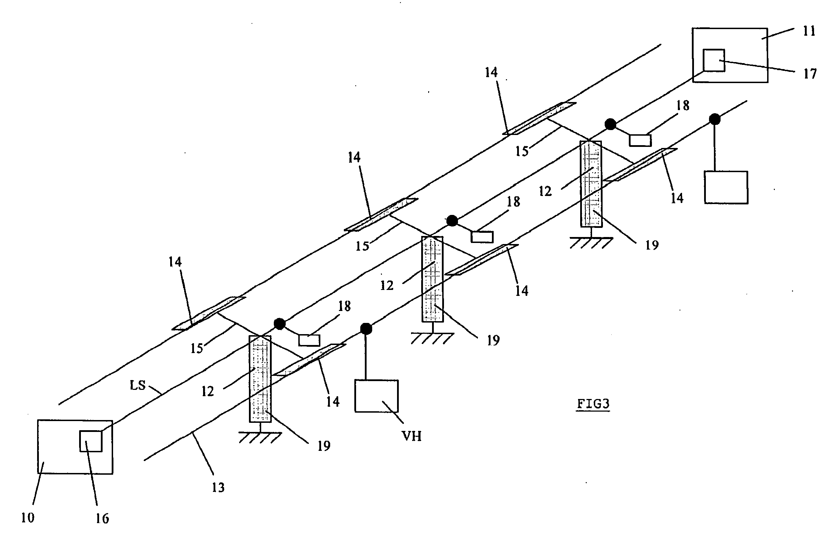

Selon la figure 3, l'installation téléportée, notamment une télécabine ou un télésiège, comporte une gare aval 10 par exemple motrice, une gare amont 11 de retour, une pluralité de pylônes 12 réparties entre les gares 10, 11 pour supporter le câble porteur-tracteur 13 des cabines VH ou sièges par l'intermédiaire de balanciers 14 fixés à des potences 15. Chaque gare 10, 11 est dotée d'un coffret de commande 16, 17 renfermant des automates et/ou de l'appareillage de contrôle et de sécurité pilotant les moyens d'entraînement de l'installation. Une ligne électrique de sécurité LS relie les deux coffrets 16, 17 après avoir été interconnectée à des détecteurs 18 ou autres organes de sécurité fixés sur chaque pylône 12. La base de chaque pylône 12 est mis individuellement à la terre au moyen d'un connection 19 électrique spécifique au niveau de l'embase métallique fixée à la plate-forme de fondation.

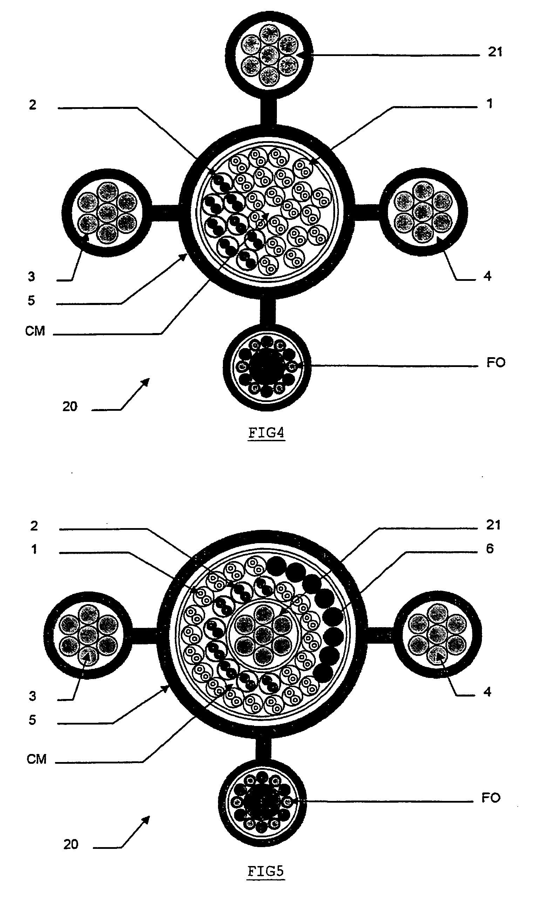

En référence à la figure 4, le câble électrique désigné par le repère général 20, est utilisé pour réaliser la ligne électrique de sécurité LS de la figure 3. Le câble électrique 20 forme un câble multipaire double porteur et quadruple huit permettant de réaliser de nouvelles fonctions, et/ou de regrouper des fonctions déjà existantes qui nécessitaient un câblage additionnel.

Le câble électrique 20 selon l'invention est composé d'un câble multipaire CM central autoporté en étant associé à différents câbles périphériques extérieurs disposés en croix. La gaine extérieure 5 en matière plastique extrudée relie de manière monobloc les différents câbles périphériques extérieurs au câble multipaire central CM.

Le câble multipaire CM central est constitué d'un faisceau de paires de fils de cuivre adapté au transport de signaux électriques et d'énergie électrique. Comme à la figure 1, le câble multipaire CM est autoporté par deux câbles porteurs 3, 4 périphériques diamétralement opposés, renfermant des fils en acier assurant la tenue mécanique lors de l'amarrage aux pylônes. Un troisième câble périphérique noyée dans la gaine 5 renferme un câble à fibres optiques FO assurant la liaison entre les automates de la gare motrice et de la gare de retour, et la transmission des informations liées à l'exploitation. Le quatrième câble périphérique noyée dans la gaine 5 est un câble de fils de cuivre 21 pour la liaison équipotentielle des gares et des pylônes.

Le câble à fibres optiques FO et le câble de fils de cuivre 21 sont diamétralement opposés dans un même plan s'étendant orthogonalement à celui des deux câbles porteurs 3, 4. Les quatre câbles périphériques 3, 21, 4 et FO sont répartis autour du câble multipaire CM central de section circulaire, avec des décalages angulaires de 90°, de manière à former une configuration en quadruple huit.

Il est clair que l'angle de décalage des câbles périphériques 3, 21, 4 et FO peut être différent de 90°.

Avec cette nouvelle configuration en quadruple huit, le câble à fibres optiques FO est à l'extérieur du câble multipaire CM central, ce qui facilite la découpe de ce dernier sans risque de couper les fibres optiques.

L'ajout du câble de fils de cuivre 21 servant pour la liaison équipotentielle des gares et des pylônes est indépendant des deux câbles porteurs 3, 4. La section des fils de cuivre de ce câble périphérique 21 est de 16mm² ou 25mm².

Cette répartition en quadruple huit selon la figure 4 des quatre câbles périphériques 3, 21, 4 et FO autour du câble multipaire CM, permet de réaliser les nouvelles fonctions suivantes, en plus de la facilité de découpe du câble multipaire CM :
- les deux câbles porteurs 3, 4 sont ajourés et isolés permettant une utilisation en surveillance double ligne sans ajout d'un câble multipaire supplémentaire. La sécurité est ainsi améliorée en cas de marche dégradée avec une seule ligne, étant donné qu'il n'y a plus qu'un seul câble multipaire ;
- la liaison équipotentielle est réalisée exclusivement par le câble de fils de cuivre 21, permettant ainsi la surveillance double ligne au moyen des deux câbles porteurs 3, 4 en acier;
- les deux câbles porteurs 3, 4 isolés peuvent être utilisés pour le transport d'énergie électrique pour l'alimentation des organes électriques et/ou électroniques présents sur les pylônes ou en gare opposée. Dans le cas d'une ligne d'alimentation en courant continu, l'un des deux câbles porteurs, 3 par exemple, est porté au potentiel positif, tandis que l'autre 4 est relié au potentiel négatif.
Selon la variante de la figure 5, le quatrième câble périphérique de la figure 4 est supprimé pour former un câble multipaire double porteur- tri huit. Les deux câbles porteurs 3, 4 en plus de leur fonction de support, sont isolés et peuvent être utilisés pour le transport d'énergie électrique pour l'alimentation des organes électriques et/ou électroniques présents sur les pylônes ou en gare opposée, ainsi qu'à la transmission d'un signal de commande type EDF. La liaison équipotentielle est alors intégrée dans le câble multipaire CM.

## Revendications

1. Câble électrique autoporté d'une ligne de sécurité s'étendant le long d'une installation de transport téléportée, ledit câble (20) étant composé :
- d'un câble multipaire (CM) de conducteurs isolés pour le transport d'énergie et de signaux électriques de surveillance liés au fonctionnement de l'installation,
- d'une paire de câbles porteurs (3,4) en fils d'acier s'étendant parallèlement au câble multipaire (CM) pour le soutenir,
- et d'une gaine (5) extérieure en matière plastique extrudée destinée à lier les deux câbles porteurs (3,4) périphériques au câble multipaire (CM),
**caractérisé en ce que** la gaine (5) plastique enveloppe un troisième câble périphérique renfermant un faisceau de fibres optiques (FO) pour la liaison entre les automates et la transmission de données, ledit troisième câble étant situé à l'extérieur du câble multipaire (CM) et décalé angulairement des deux câbles porteurs (3,4).

2. Câble électrique autoporté selon la revendication 1, **caractérisé en ce qu'**un quatrième câble périphérique (21) de fils conducteurs est porté par la gaine (5) pour assurer une liaison équipotentielle des gares (10,11) et des pylônes (12).

3. Câble électrique autoporté selon la revendication 2, **caractérisé en ce que** le troisième câble à fibres optiques (FO) et le quatrième câble (21) d'équipotentiel sont disposés de part et d'autre du câble multipaire (CM).

4. Câble électrique autoporté selon la revendication 3, **caractérisé en ce que** les câbles périphériques (3,21,4,FO) sont répartis autour du câble multipaire (CM) central de section circulaire avec des décalages angulaires prédéterminés de manière à former une configuration de câble multipaire double porteur en quadruple huit.

5. Câble électrique autoporté selon la revendication 1, **caractérisé en ce que** le troisième câble périphérique à fibres optiques (FO) est décalé des deux câbles porteurs (3,4) pour former un câble multipaire double porteur- tri huit.

6. Câble électrique autoporté selon la revendication 1, **caractérisé en ce que** les deux câbles porteurs (3,4) sont ajourés et isolés pour autoriser une surveillance d'une double ligne sans ajout d'un câble multipaire supplémentaire.

7. Câble électrique autoporté selon la revendication 1, **caractérisé en ce que** les deux câbles porteurs (3,4) isolés sont agencés pour le transport d'énergie électrique pour l'alimentation d'organes électriques et/ou électroniques présents sur les pylônes ou en gare opposée.
